# EUROPEAN PATENT APPLICATION

(11) **EP 2 196 806 A1**
(43) Date of publication of application: **16.06.2010**
(21) Application number: 07807380.6
(22) Date of filing: 14.09.2007
(51) Int. Cl.: G01N 35/08

(54) **LIQUID FLUID TESTING INSTRUMENT AND TESTING METHOD**

(71) Applicant: TTM Co., Ltd., Osaka-shi, Osaka 532-0011 (JP)
(72) Inventor: USUI, Tsutomu, Osaka-shi Osaka 532-0011 (JP)
(74) Representative: Ström & Gulliksson AB
(86) International application number: PCT/JP2007/067976
(87) International publication number: WO 2009/034650

(57) **Abstract**

Printed surface 202b and 204b in black color are formed on a second plate 2 and a fourth plate 4. The printed surface 202b covers almost the entire surface of the second plate 2 except for an area smaller than a diameter of a through-portion 71 of a third plate 3. A predetermined amount of reagent is applied to the part. The fourth plate 4 is configured in a similar manner to the second plate 2. The printed surfaces allows measurement with transmitted light blocked in the smallest diameter during measurement. This prevents inaccurate measurement due to position misalignment.

## Description

### Technical Field

The present invention relates to an equipment for testing characteristics of a liquid type fluid, more specifically to the detection of transmitted lights.

### Background Art

Patent document 1 discloses a test equipment 200 for testing components of biological fluid. FIG. 1 shows a cross-sectional view of the test equipment 200.

Description is made to a reaction chamber of the test equipment 200. A through-hole 71 is formed in a third plate 3 made of a porous plate, and in a second plate 2 and a fourth plate 4, holes 72 and 73 with their bottoms are located in positions opposed to the through-hole. A test reagent is applied on the bottom surface of the hole 73 in the fourth plate 4. A measuring chamber 7 having a predetermined volume is formed with the through-hole 71, the holes 72 and 73.

When an analyte A is guided into the measuring chamber 7, a predetermined color reaction occurs. Light is irradiated in the direction of an arrow 220. The light transmitted through the measuring chamber 7 is detected by a sensor or the like. Then, the value of the obtained light intensity is integrated. Accordingly, characteristics of the analyte provided for the test can be identified.

Patent document 1: Japanese patent laid-open publication No. 2002-224090

### Disclosure of the Invention

### Problem to be Solved by the Invention

However, there exist the following problems with the measuring chamber.

As described in the above, when the positions of the holes in the third plate 3 and the fourth plate 4 are misaligned to each other, the positional relationship among the through -hole 71, the holes 72 and 73 with their bottoms is also misaligned. In the case that the amount of color generated by the color reaction in the reaction chamber is measured through its absorbance, misalignment of the holes influence proportionally on the measurement results due to the misalignment.

There exist the following problems even if no misalignment occurs thereamong. Generally, a plastic(s) having excellent optical transparency such as AS (stylene acrylonitrile resin), PC (polycarbonate), acrylic , and PET (polyethylene terephthalate) is used for the second plate 2 and the fourth plate 4. The surface of these plastics has a hydrophobic property. In other words, it has low affinity for a solution of test reagent and its contact angle to the surface is large. Consequently, uneven application of the solution is carried out if the solution of test reagent is applied without any pretreatments. Under such a circumstance, accurate measurement cannot be carried out due to unevenness occurred in the color reaction.

Such defects become problems not only in the case of examination of blood, but also in the case of carrying out examination of biological fluid, further in the case of using liquid type fluid as a test subject(s) as well.

It is an object of the present invention to provide a simple test equipment and a method for testing, both capable of carrying out accurate measurement.

### Means for Solving the Problem

One aspect of the present invention provides a method for testing, using a test equipment comprising: a supply portion for supplying test-subject liquid type fluid; a reaction chamber in which the test-subject liquid type fluid and a reagent react; and a flow channel for transporting the test-subject liquid type fluid supplied to the supply portion to the reaction chamber, the test equipment comprising a first optically transparent plate; a porous plate positioned below the first optically transparent plate and configured with a porous membrane having air-permeable and liquid-nonpermeable properties; and a second optically transparent plate positioned below the porous plate, wherein the reaction chamber is configured by interposing a through-groove formed on the porous plate in a predetermined shape between the first optically transparent plate and the second optically transparent plate, a surface on which a reagent is to be adhered is formed on a side close to the porous plate of each of the first optically transparent plate and the second optically transparent plate, the surface on which a reagent is to be adhered is covered by an optically non-transparent printed surface so that a surface thereof is exposed in a shape smaller than a cross-sectional shape in a plane perpendicular to the thickness direction of the porous plate of the reaction chamber, different reagents are adhered on the respective surfaces on which reagents are to be adhered of the first optically transparent plate and the second optically transparent plate, the test-subject liquid type fluid supplied to the supply portion is pressurized by a pressurizing portion provided in the supply portion and transported into the reaction chamber via the flow channel, and color reactions between the test-subject liquid type fluid and the reagents in the reaction chamber are measured by transmitting light therethrough.

As described above, the optically non-transparent printed surface functions as a wall, thereby preventing a liquid body from spreading more widely when the reagent is applied. This prevents unevenness of the reagent when the reagent is applied. Further, the surface on which a reagent is to be adhered is covered by the light non-transparent printed surface so that it is exposed in the shape smaller than the cross-sectional shape in the plane perpendicular to the thickness direction of the porous plate of the reaction chamber. This allows measurement of color reaction at a part of the reaction chamber. Therefore, even if the first optically transparent plate, the second optically transparent plate, and the porous plate are misaligned, accurate measurement can be carried out.

Another aspect of the present invention provides a test equipment comprising: a first optically transparent plate having a supply portion for supplying test-subject liquid type fluid; a porous plate positioned below the first optically transparent plate and configured with a porous membrane having air-permeable and liquid non-permeable properties; and a second optically transparent plate positioned below the porous plate, in which the porous plate has a reaction chamber in which the test-subject liquid type fluid and a reagent react, and a porous plate communication flow channel communicating with the reaction chamber, the first optically transparent plate has a first optically transparent plate flow channel for transporting the test-subject liquid type fluid supplied to the supply portion to the porous plate communication flow channel, at least either a side of the first optically transparent plate close to the porous plate or a side of the second optically transparent plate close to the porous plate is covered by an optically non-transparent printed surface such that a shape smaller than a cross-sectional shape in a plane perpendicular to the thickness direction of the porous plate of the reaction chamber is exposed, and 7) a reagent is adhered on the shape that is not covered by the optically non-transparent printed surface.

Accordingly, the optically non-transparent printed surface functions as a wall, thereby preventing a liquid body from spreading more widely when the reagent is applied. This prevents unevenness of the reagent when the reagent is applied. Further, the shape that is not covered by the optically non-transparent printed surface is smaller than the cross-sectional shape in the plane perpendicular to the thickness direction of the porous plate of the reaction chamber. This allows measurement of color reaction at a part of the reaction chamber. Therefore, even if the first optically transparent plate or the second optically transparent plate and the porous plate are misaligned, accurate measurement can be carried out.

In the test equipment in accordance with the present invention, both the side of the first optically transparent plate close to the porous plate and the side of the second optically transparent plate close to the porous plate are covered by optically non-transparent printed surfaces such that shapes smaller than cross-sectional shapes in planes perpendicular to the thickness direction of the porous plate of the reaction chamber are exposed, and different reagents are adhered on the respective small areas that are not covered by the optically non-transparent printed surfaces. Therefore, when the test-subject liquid type fluid is supplied to a reagent that cannot be premixed therewith, the test-subject liquid type fluid allows mixing between different reagents.

In the test equipment in accordance with the present invention, the small shapes of the first optically transparent plate and the small area of the second optically transparent plate are different from each other in size. Accordingly, measurement can be carried out at a still smaller one of the small areas. Therefore, even if the first optically transparent plate, the second optically transparent plate, and the porous plate are misaligned, accurate measurement can be carried out.

In the test equipment in accordance with the present invention, the small shapes that are not covered by the optically non-transparent printed surface is provided with hydrophilic treatment, and the reagent is adhered on the hydrophilically treated surface. Therefore, even if the surface has a hydrophobic property, an uneven thickness of the applied reagent can be prevented.

One aspect of the present invention provides a test equipment comprising: a first optically transparent plate having a supply portion for supplying test-subject liquid type fluid; a porous plate positioned below the first optically transparent plate and configured with a porous membrane having air-permeable and liquid non-permeable properties; and a second optically transparent plate positioned below the porous plate, in which the porous plate has a reaction chamber in which the test-subject liquid type fluid and a reagent react, and a porous plate communication flow channel communicating with the reaction chamber, the first optically transparent plate has a first optically transparent plate flow channel for transporting the test-subject liquid type fluid supplied to the supply portion to the porous plate communication flow channel, at least either a side of the first optically transparent plate close to the porous plate or a side of the second optically transparent plate close to the porous plate is covered by an optically non-transparent printed surface such that an area smaller than a cross-sectional shape in a plane perpendicular to the irradiating direction of light for examining a color reaction in the reaction chamber is exposed, and a reagent is adhered on the area that is not covered by the optically non-transparent printed surface.

As described above, the side(s) close to the porous plate is covered by the optically non-transparent printed surface such that the area smaller than the cross-sectional shape in the plane perpendicular to the irradiating direction of light for measuring a color reaction in the reaction chamber is exposed. Accordingly, the optically non-transparent printed surface functions as a wall, thereby preventing a liquid body from spreading more widely when the reagent is applied. This prevents unevenness of the reagent when the reagent is applied.

Further, the side(s) close to the porous plate is covered by the optically non-transparent printed surface such that the area smaller than the cross-sectional shape in the plane perpendicular to the irradiating direction of light for measuring a color reaction in the reaction chamber is exposed. This allows measurement of color reaction at a part of the reaction chamber. Therefore, even if there is a misalignment between the first optically transparent plate or the second optically transparent plate and the porous plate, accurate measurement can be carried out.

In the test equipment in accordance with the present invention, the area that is not covered by the optically non-transparent printed surface is provided with hydrophilic treatment, and the reagent is adhered on the hydrophilically treated surface. This prevents an uneven thickness of an applied reagent in the case that a predetermined amount of reagent is applied to the hydrophilically treated surface.

Still another aspect of the present invention provides a test equipment comprising: a first optically transparent plate having a supply portion for supplying test-subject liquid type fluid; a porous plate positioned below the first optically transparent plate and configured with a porous membrane having air-permeable and liquid non-permeable properties; and a second optically transparent plate positioned below the porous plate, in which the porous plate has a reaction chamber in which the test-subject liquid type fluid and a reagent react, and a porous plate communication flow channel communicating with the reaction chamber, the first optically transparent plate has a first optically transparent plate flow channel for transporting the test-subject liquid type fluid supplied to the supply portion to the porous plate communication flow channel, and at least either a side of the first optically transparent plate close to the porous plate or a side of the second optically transparent plate close to the porous plate is covered by an optically non-transparent printed surface such that an area smaller than a cross-sectional shape in a plane perpendicular to the thickness direction of the porous plate of the reaction chamber is exposed.

Accordingly, the optically non-transparent printed surface functions as a wall, thereby preventing a liquid body from spreading more widely when the reagent is applied. This prevents unevenness of the reagent when the reagent is applied. Further, the small area that is not covered by the optically non-transparent printed surface is smaller than the cross-sectional shape in the plane perpendicular to the thickness direction of the porous plate of the reaction chamber. Therefore, when a color reaction is measured with transmitted light, the measurement can be carried out with a color reaction at a part of the reaction chamber. Therefore, even if there is a misalignment between the first optically transparent plate or the second optically transparent plate and the porous plate, accurate measurement can be carried out.

In the test equipment in accordance with the present invention, the small area is provided with hydrophilic treatment. This prevents an uneven thickness of an applied reagent in the case that a predetermined reagent is applied to the hydrophilically treated surface.

In the present specification, a "first optically transparent plate", a "porous plate", and a "second optically transparent plate" correspond to a second plate 2, a third plate 3, and a fourth plate 4, respectively. In an embodiment, a "cross-sectional shape in a plane perpendicular to the thickness direction of the porous plate of a reaction chamber" corresponds to a cross-sectional shape of a measuring chamber 7 in the horizontal direction. In the embodiment, a "porous plate communication flow channel" corresponds to a through-hole 81. In the embodiment, a "first optically transparent plate flow channel" corresponds to a through-portion 82 and a through-groove 83.

Further, "test-subject liquid type fluid" includes not only body fluids such as blood, saliva, urine, lymph fluid, sweat, and tissue fluid but also other liquid type fluids. In the embodiment, a "reaction chamber" corresponds to the measuring chamber 7.

### Brief Description of Drawings

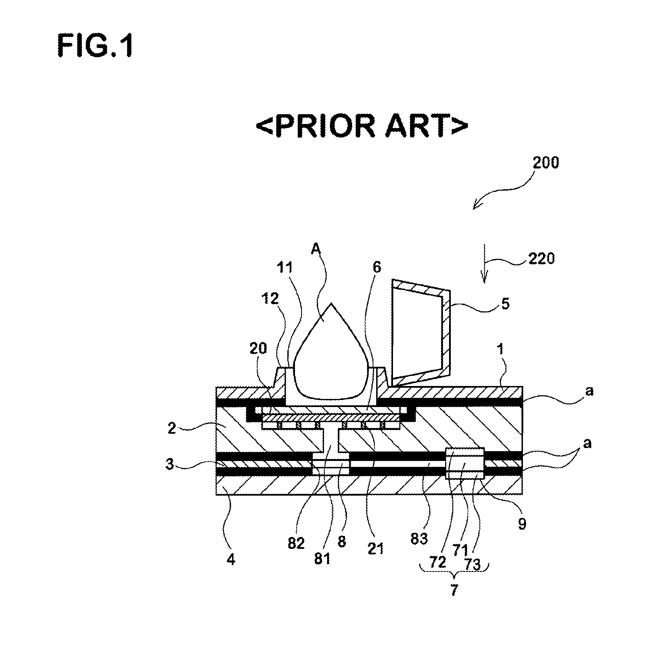

FIG. 1 is a vertical cross-sectional view showing a conventional test equipment 200.
FIG. 2 is a vertical cross-sectional view showing an embodiment of a test equipment 100 according to the present invention.
FIG. 3 is an exploded perspective view of the test equipment 100 in FIG. 2.
FIGs. 4 are diagrams showing an exemplary method for forming a printed surface.
FIGs. 5 are diagrams showing an exemplary application of a reagent.
FIG. 6 shows essential parts of a measuring chamber 7 on a larger scale.
FIGs. 7 are diagrams for describing a state during measurement.

### Description of Reference Numerals

2: second plate
3: third plate
4: fourth plate
7: measuring chamber
8: flow channel
A: analyte
202b: printed surface
204b: printed surface

### Embodiments for Carrying out the Invention

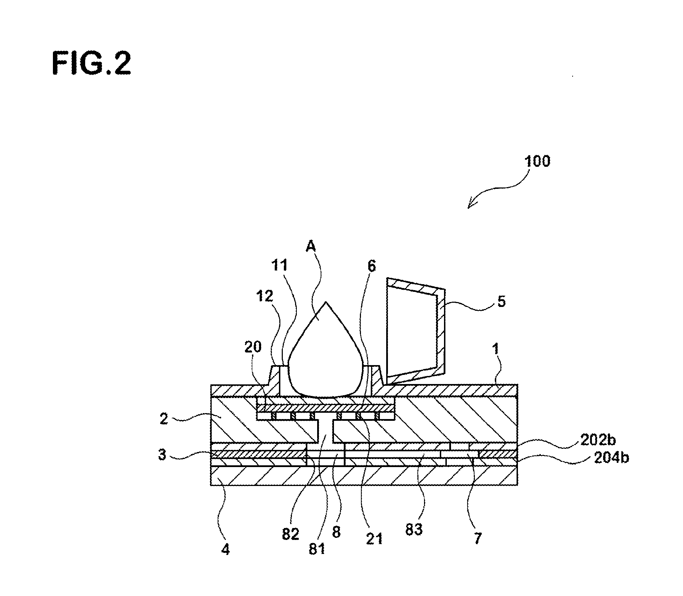

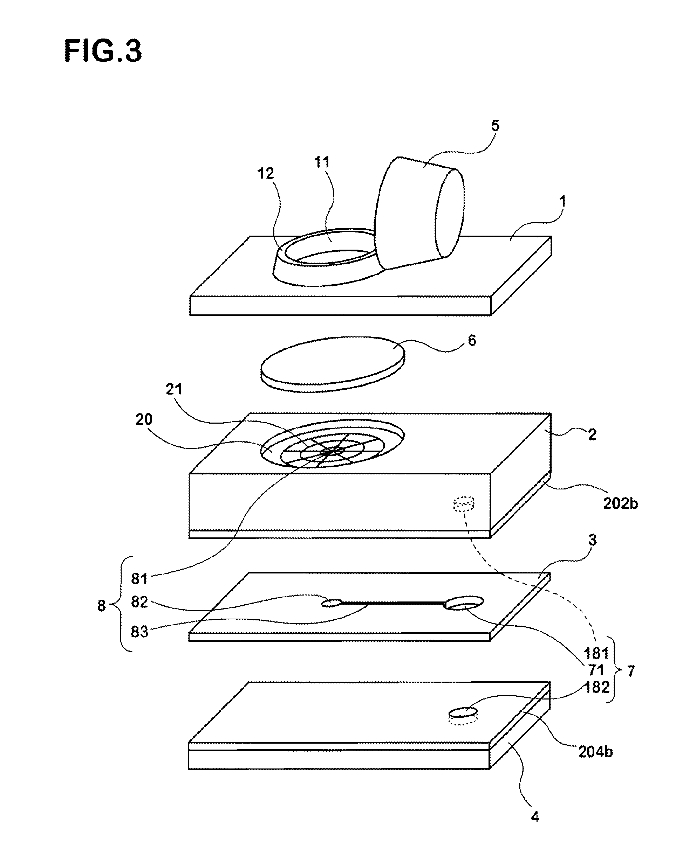

A test equipment 100 for testing blood is described herein as an embodiment of a test equipment according to the present invention with reference to drawings. FIG. 2 shows a vertical cross-sectional view of the test equipment 100 for testing blood, and FIG. 3 shows an exploded perspective view of the test equipment 100 for testing blood.

The test equipment 100 includes four plates that are a first plate 1 through a fourth plate 4, each layered vertically. A round-shaped analyte supply port 11 is formed on the side of the first plate 1 located on the uppermost side. A weir 12 is provided around the upper part of the supply port 11. A cylindrically shaped cover 5 with its bottom is detachably provided to the weir 12. Such a cover 5 is made of an elastic material such as butyl rubber.

A cylindrically shaped concave inlet portion 20 is provided in the second plate 2 located below the first plate 1 so that the portion is located opposed to the supply port 11. A plurality of round-shaped ribs 21 are concentrically and radially formed inside the concave inlet portion 20 (see FIG. 2). The ribs 21 support a blood cell separation layer 6 made of a membrane having asymmetric pore diameters for separating blood cells.

A vertically extending through-hole 81 is formed at the center of the ribs 21 in the second plate 2 (see FIG. 2).

The third plate 3 has two round-shaped through-portions 71, 82 located at a predetermined distance. A linearly shaped through-groove 83 connects the through-portions 71 and 82 together (see FIG. 2). The through-portion 82 is located at a position generally concentric with the through-portion 81 in a state that the third plate 3 overlaps with the second plate 2. The through-portion 82 has a larger diameter than that of the through-hole 81. This is for facilitating introduction of analyte A into the measuring chamber 7, but such a shape of the hole is not essential.

In addition, a printed surface 202b in black color is formed on the side of the second plate 2 contacting with the third plate 3 as shown in FIG. 3. The printed surface 202b covers almost the entire surface of the second plate 2 except for the area without print having a smaller diameter than that of the through-portion 71 of the third plate 3. A predetermined amount of test reagent is applied on the area where the printed surface 202b is not provided. Hydrophilic treatment is carried out on the surface to which test reagent is applied. Details of the shape of the printed surface 202b, application of the test reagent, and the hydrophilic treatment will be described later.

Similarly to the second plate 2, a printed surface 204b in black color is formed on the side of the fourth plate 4 contacting with the third plate 3. The printed surface 204b covers almost the entire surface of the second plate 2 except for the area opposed to the through-portion 71 of the third plate 3. A predetermined amount of test reagent different from that of the second plate 2 is applied on the area opposed to the through-portion 71 of the third plate 3. The hydrophilic treatment is carried out on the surface to which the test reagent is applied. Details of the shape of the printed surface 204b, the application of the test reagent, and the hydrophilically treated surfacewill be described later.

The measuring chamber 7 is formed by holding the through-portion 71 of the third plate 3 between the second plate 2 and the fourth plate 4.

Although, AS(styrene-acrylonitrile ) is used as a plastic material that is easy to process for the first plate 1, the second plate 2, and the fourth plate 4 in this embodiment, but other material(s) may also be used therefor. The third plate 3 is made of a 75µm thick PTFE (polytetrafluoroethylene) film with 1 µm pore diameter as a porous membrane having air-permeable and liquid-nonpermeable property, but other material(s) may also be used therefor. The reason for using such a porous membrane having air-permeable and liquid-nonpermeable properties is to reliably transport the analyte A into the measuring chamber 7 by letting out the air existing in a flow channel to the outside without letting out the analyte A to the outside. In addition, a cover made of butyl rubber is used as the cover 5, and a membrane having asymmetric pore diameters is used as the blood cell separation layer 6.

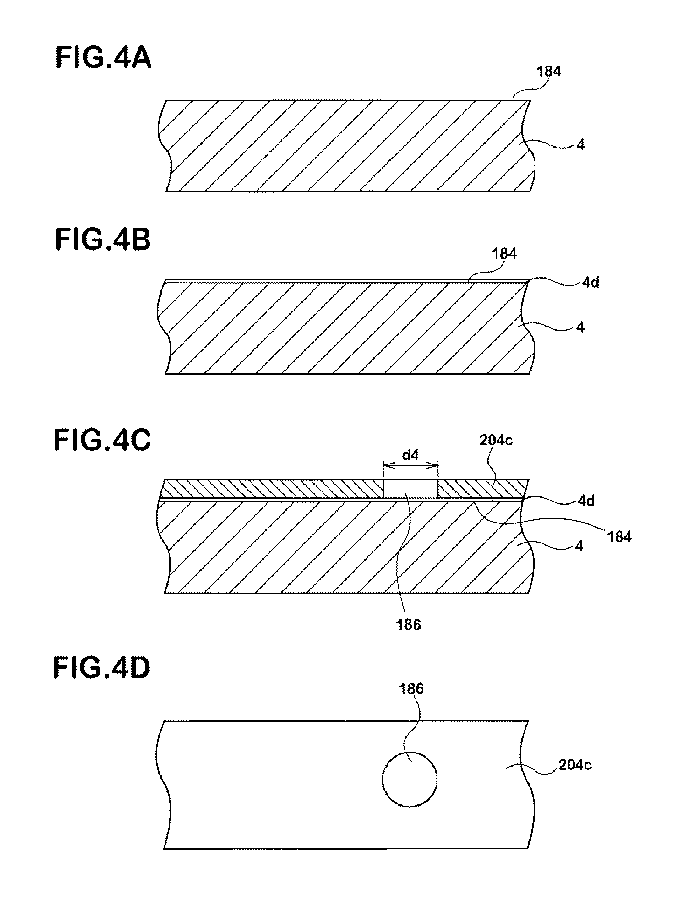

The printed surfaces of the second plate 2 and the fourth plate 4, the application of the test reagent, and the hydrophilically treated surface will be described with reference to FIG. 4. In the following, the fourth plate 4 is used as an example, the same is true for the second plate 2.

The hydrophilic treatment is carried out on a first surface 184 that is a surface of the fourth plate 4 shown in FIG. 4A located on the third plate 3 as shown in FIG. 4B. For the hydrophilic treatment, for example, a layer having hydrophilic nature may be coated thereon. In this way, a hydrophilically treated surface 4d entirely covers the first surface 184. Subsequently, a printed surface 4c in black color is formed so that a hole 186 is located in a part of the hydrophilically treated surface 4d as shown in FIG. 4C. The hole 186 is made so as to be a round-shaped hole that has a smaller diameter d4 than the diameter of the through-hole 71 of the third plate 3. As a consequence, the printed surface 4c covers the hydrophilically treated surface except for the hole 186. In this embodiment, the printed surface 4c is formed by carrying out screen printing in black color on the hydrophilically treated surface 4d.

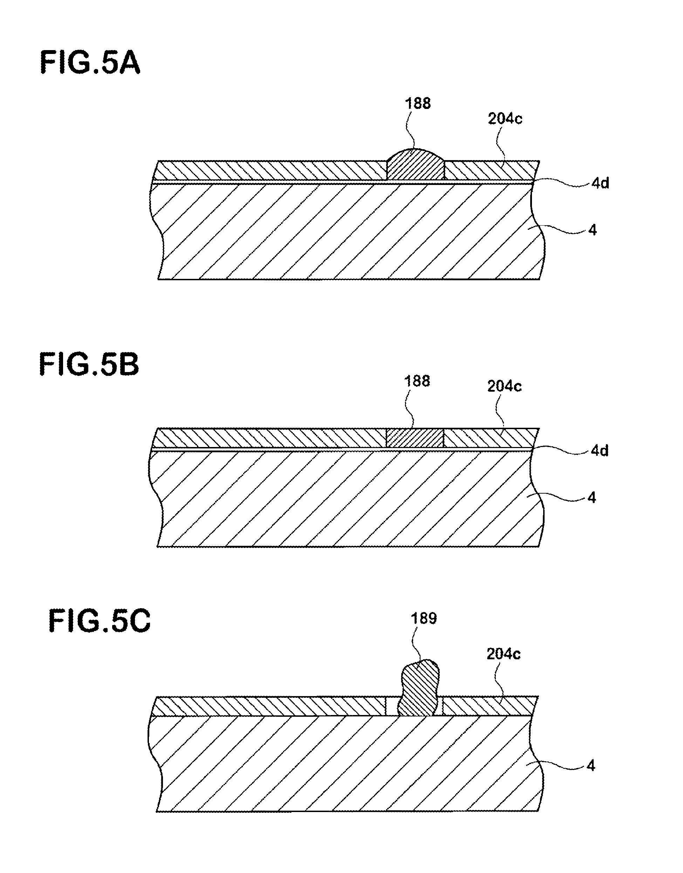

A predetermined amount of test reagent is applied to the hole 186. Just after the application of the reagent, the test reagent 188 is still on the hole 186 as shown in FIG. 5A.

Advantages of the hydrophilic treatment and the printed surface 204 will be described. In this embodiment, the hydrophilic treatment is carried out on the exposed surface of the hole 186, and a wall is formed around the hole 186 by the printed surface 4c. When a test reagent is applied to the hole 186, the applied test reagentis apt to expand horizontally due to the hydrophilic treatment. On the other hand, since the printed surface 4c is water-repellent, it prevents overflow of the test reagent so that the reagent does not expand to overcome the wall formed by the printed surface 4c. Consequently, the applied test reagent becomes a shape like a hill growing from the hole 186 as shown in FIG. 5A without expanding the test reagent 188 to overcome the hole 186, or without adhering to just a part of the hole 186 (see FIG. 5C) on the contrary. The surface hardens smoothly as moisture of the test reagent 188 evaporates over time as FIG. 5B. In FIG. 5B, the height of the surface is the same as that of the printed surface 204b, but the surface of it does not become such a shape.

Similarly to the fourth plate 4, formation of a printed surface, application of test reagent, and formation of a hydrophilically treated surface are carried out for the second plate 2 as well.

Another kind of test reagent in a predetermined amount is applied to the second plate 2 and the fourth plate 4. The kind of such a test reagent may vary corresponding to the measured subject. For example, in the case of measuring blood glucose as a component of biological fluid, such measurement may be carried out by applying a solution containing NAD(oxidized nicotinamide adenine dinucleotide) and tetrazolium salt to one side, and by applying a solution containing glucose dehydrogenase, diaphorase and buffer fluid to the other side, and then drying them up. Alternatively, these solutions can also be applied in the opposite order.

In this embodiment, 10 µl of a test reagent containing 3.6% of nicotinamide adenine dinucleotide, 5.2% of WST-3 [2-(4-iodephenyl)-3-(2,4-dinitrophenyl)-5-(2,4-disulfonatephenyl)-2H-tetrazolium; those manufactured by DOJINDO LABORATORIES] are dropped on the hydrophilically treated surface of the second plate 2. Ten µl of a test reagent containing 2KU/ml of glucose dehydrogenase, 1KU/ml of diaphorase, and 50mM phosphate buffer fluid at pH 7.5 is dropped on the hydrophilically treated surface of the second plate 2. Each of the test reagents is dried.

Further, in the case of measuring neutral fat (triglyceride), such measurement may be carried out by applying a solution containing NAD and tetrazolium salt to one side and by applying a solution containing lipase, glycerol dehydrogenase,diaphorase and buffer solution to the other side.

In the case of measuring a total cholesterol, such measurement may be carried out by applying a solution containing NAD and tetrazolium salt to one side and by applying a solution containing cholesterol esterase, cholesterol dehydrogenase, diaphorase and buffer solution to the other side.

The amount of test reagent may be determined by the volume of the analyte A, i.e. the volume of the measuring chamber 7 after the test reagent is dried.

The first plate 1 through the fourth plate 4 are formed so that they are unitarily formed in a laminated state by using adhesive. In addition, the blood separation layer 6 is fixed to the first plate 1 and the second plate 2 by adhesive (not shown).

Subsequently, a measuring method for actual measurement will be described. The user supplies the analyte A from the analyte supply port 11. Then the cover 5 is put on the supply port 11 and pushed down with a finger (not shown). In this way, the air in the measuring chamber 7 is pushed out through the third plate 3, and the analyte A is sent into the measuring chamber 7. In this way, the flow channel is formed by the through-portion 82, the through-hole 81, and the through-portion 83.

Two kinds of test reagents are separately applied to the measuring chamber 7 so that they form a space therebetween, and a reaction starts when the analyte A is delivered to the space between a hole 175 on a side surface 173 of the measuring chamber 7 and the measuring chamber 7. Since the analyte A is mixed with the two kinds of reagents together in a space, a problem is solved better that the mixture has denser parts and thinner parts if compared to conventional cases.

In addition, the present embodiment has an advantage that application of these test reagents is facilitated because the two kinds of test reagents are applied to surfaces opposed to each other. Further, the distance between the both surfaces can easily be controlled when the two kinds of test reagents are applied to surfaces opposed to each other. Consequently, by controlling such a distance, it allows control of a reaction that the analyte and two kinds of reagents are mixed and react.

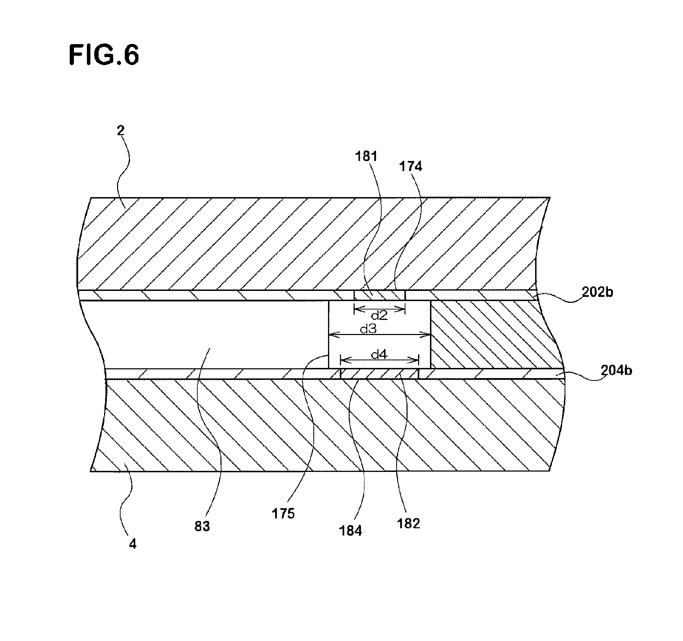

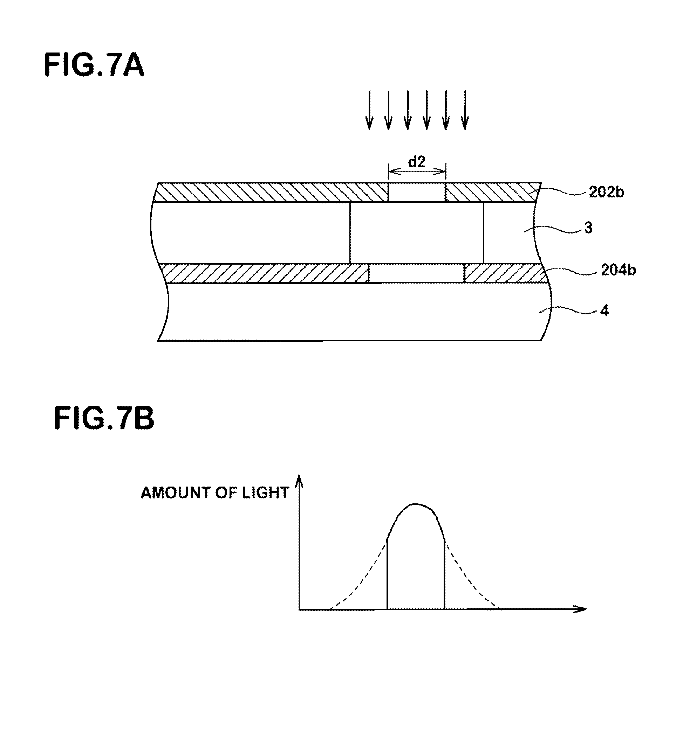

For the method of measuring the analyte A in the measuring chamber 7, a known optical measurement can be adopted. For example, transmitting light B at a wave length 565 nm is irradiated from the lower side of the fourth plate 4 toward the second plate 2, the absorbance of the transmitted light B is measured, and thereby the amount of coloring can be measured. At this point, the second plate 2 and the fourth plate 4 are masked by printed surfaces in black color. The relationship among a diameter d2 of the hole in the second plate 2, a diameter d4 of the hole in the fourth plate 4, and a diameter d3 of the hole in the third plate 3 is d3> d4>d2 as shown in FIG. 6. In this way, the irradiated light is blocked except for the hole in the smallest diameter d2. Consequently, the detection value shown in FIG. 7 is obtained. Thus, accurate measurement of color reaction can be carried out by measuring the integrated value of the obtained detection value. This is because color reaction can be measured by the amount of light transmitting through the hole in the smallest diameter d2 even when slight misalignment occurs during the process of forming the printed surface(s) and the through-hole(s) of the second plate 2, the third plate 3 and the fourth plate 4.

Although, it is described that blood is measured as a component of biological fluid of a living body in this embodiment, any other biological fluid such as saliva, urine, lymph fluid, sweat, and tissue fluid may also be adopted. In addition, any kind of liquid type fluid(s) other than these biological fluids reacted with at least two kinds of test reagents can be adopted.

In this embodiment, descriptions are made about a case that a single flow channel and a single measuring chamber are provided. However, pluralities of flow channels and measuring chambers may be formed, different reagents may be applied to those portions, and thereby a plurality of examinations may be carried out (see FIG. 3 of Japanese patent laid-open publication No. 2002-224090).

In this embodiment, the third plate 3 is directly held between the plate 2 that is the first optically transparent plate and the plate 4 that is the second optically transparent plate. However, still another plate may be held between those plates.

In this embodiment, the cover 5 is pressurized, air present in the flow channel 8 and the measuring chamber 7 is discharged outside, and thereby the analyte A is smoothly guided into the measuring chamber 7. However, as long as air present in the flow channel 8 and the measuring chamber 7 can be discharged outside, any means may be applied. For example, the test equipment may be put in a sealed space, and the pressure of the sealed space may be adjusted to a negative pressure state.

Further, the measuring chamber and flow channel are not limited to the shapes in this embodiment, but may be formed into any shapes.

The printed surface is in black. However, the color is not limited to black, and the printed surface may be in, another color as long as the printed surface has light-blocking characteristics. The light-blocking characteristics prevent a phenomenon that light enters from an unintended light source (stray light).

In the above embodiment, the entire surface of the fourth plate 4 is hydrophilically treated, and then screen printing is applied. However, the hydrophilic treatment may be provided to only a part so that the part includes an area in which a hole is formed after the hydrophilic treatment.

The hydrophilic treatment may be provided to only the part that is not covered by the printed surface after the screen printing is applied. Known methods such as a sputtering method can be used for the hydrophilic treatment.

In this embodiment, two kinds of reagents are applied to the opposed surfaces. However, those may be the same reagent. Further, the reagent may be applied to only one of the opposed surfaces. In this case, the hydrophilic treatment is not required for the surface on which the reagent is not applied. The surface on which the reagent is not applied may not be printed in black.

Alternatively, the hydrophilic treatment itself may be omitted.

## Claims

1. A method for testing,
using a test equipment including: a supply portion for supplying test-subject liquid type fluid; a reaction chamber in which the test-subject liquid type fluid and a reagent react; and a flow channel for transporting the test-subject liquid type fluid supplied to the supply portion to the reaction chamber, the test equipment comprising a first optically transparent plate; a porous plate positioned below the first optically transparent plate and configured with a porous membrane having air-permeable and liquid-nonpermeable property; and a second optically transparent plate positioned below the porous plate,
wherein the reaction chamber is configured by interposing a through-groove formed on the porous plate in a predetermined shape between the first optically transparent plate and the second optically transparent plate,
a surface on which a reagent is to be adhered is formed on a side close to the porous plate of each of the first optically transparent plate and the second optically transparent plate,
the surface on which a reagent is to be adhered is covered by an optically non-transparent printed surface so that a surface thereof is exposed in a shape smaller than a cross-sectional shape in a plane perpendicular to the thickness direction of the porous plate of the reaction chamber,
different reagents are adhered on the respective surfaces on which reagents are to be adhered of the first optically transparent plate and the second optically transparent plate,
the test-subject liquid type fluid supplied to the supply portion is pressurized by a pressurizing portion provided in the supply portion and transported into the reaction chamber via the flow channel, and
color reactions between the test-subject liquid type fluid and the reagents in the reaction chamber are measured by transmitting light therethrough.

2. A test equipment comprising:
a first optically transparent plate having a supply portion for supplying test-subject liquid type fluid;
a porous plate positioned below the first optically transparent plate and configured with a porous membrane having air-permeable and liquid non-permeable property; and
a second optically transparent plate positioned below the porous plate,
wherein the porous plate has a reaction chamber in which the test-subject liquid type fluid and a reagent react and a porous plate communication flow channel communicating with the reaction chamber,
the first optically transparent plate has a first optically transparent plate flow channel for transporting the test-subject liquid type fluid supplied to the supply portion to the porous plate communication flow channel,
at least either a side of the first optically transparent plate close to the porous plate or a side of the second optically transparent plate close to the porous plate is covered by an optically non-transparent printed surface such that an area smaller than a cross-sectional shape in a plane perpendicular to the thickness direction of the porous plate of the reaction chamber is exposed, and
a reagent is adhered on the shape that is not covered by the optically non-transparent printed surface.

3. The test equipment according to claim 2,
wherein both the side of the first optically transparent plate close to the porous plate and the side of the second optically transparent plate close to the porous plate are covered by optically non-transparent printed surfaces such that the areas smaller than cross-sectional shapes in planes perpendicular to the thickness direction of the porous plate of the reaction chamber are exposed, and
different reagents are adhered on each small areas that are not covered by the optically non-transparent printed surfaces.

4. The test equipment according to claim 3,
wherein the small areas of the first optically transparent plate and the small area of the second optically transparent plate are different from each other in size.

5. The test equipment according to claim 3,
wherein the small area that are not covered by the optically non-transparent printed surface is provided with hydrophilic treatment, and the reagent is adhered on the hydrophilically treated surface.

6. A test equipment comprising:
a first optically transparent plate having a supply portion for supplying test-subject liquid type fluid;
a porous plate positioned below the first optically transparent plate and configured with a porous membrane having air-permeable and liquid non-permeable property; and
a second optically transparent plate positioned below the porous plate,
wherein the porous plate has a reaction chamber in which the test-subject liquid type fluid and a reagent react and a porous plate communication flow channel communicating with the reaction chamber,
the first optically transparent plate has a first optically transparent plate flow channel for transporting the test-subject liquid type fluid supplied to the supply portion to the porous plate communication flow channel,
at least either a side of the first optically transparent plate close to the porous plate or a side of the second optically transparent plate close to the porous plate is covered by an optically non-transparent printed surface such that an area smaller than a cross-sectional shape in a plane perpendicular to the irradiating direction of light for examining a color reaction in the reaction chamber remains, and
a reagent is adhered on the area that is not covered by the optically non-transparent printed surface.

7. The test equipment according to claim 6,
wherein the area that is not covered by the optically non-transparent printed surface is provided with hydrophilic treatment, and the reagent is adhered on the hydrophilically treated surface.

8. A test equipment comprising:
a first optically transparent plate having a supply portion for supplying test-subject liquid type fluid;
a porous plate positioned below the first optically transparent plate and configured with a porous membrane having air-permeable and liquid non-permeable property; and
a second optically transparent plate positioned below the porous plate,
wherein the porous plate has a reaction chamber in which the test-subject liquid type fluid and a reagent react and a porous plate communication flow channel communicating with the reaction chamber,
the first optically transparent plate has a first optically transparent plate flow channel for transporting the test-subject liquid type fluid supplied to the supply portion to the porous plate communication flow channel, and
at least either a side of the first optically transparent plate close to the porous plate or a side of the second optically transparent plate close to the porous plate is covered by an optically non-transparent printed surface such that an area smaller than a cross-sectional shape in a plane perpendicular to the thickness direction of the porous plate of the reaction chamber remains.

9. The test equipment according to claim 8, wherein the small area is provided with hydrophilic treatment.
